# EUROPEAN PATENT SPECIFICATION

(11) **EP 1 532 076 B1**
(45) Date of publication and mention of the grant of the patent: **15.05.2019**
(21) Application number: 03790910.8
(22) Date of filing: 19.08.2003
(51) Int. Cl.: C01B 39/36, C01B 39/38

(54) **PROCESS FOR THE PREPARATION OF DOPED PENTASIL-TYPE ZEOLITES USING DOPED SEEDS**
VERFAHREN ZUR HERSTELLUNG VON DOTIERTEN ZEOLITHEN DES PENTASIL-TYPS MITTELS DOTIERTEN KEIMEN
PROCESSUS DE PRÉPARATION DE ZÉOLITES DOPÉES DE TYPE PENTASIL À PARTIR DE GERMES DOPÉS

(30) Priority: 28.08.2002 US 406442 P; 24.10.2002 EP 02079434
(43) Date of publication of application: 25.05.2005
(73) Proprietor: Albemarle Netherlands B.V., 3818 LH Amersfoort (NL)
(72) Inventor: BRADY, Mike, Studio City, CA 91604 (US); LAHEIJ, Erik, Jeroen, NL-1181 SW Amstelveen (NL); O'CONNOR, Paul, NL-3871 KM Hoevelaken (NL); STAMIRES, Dennis, Newport Beach, CA 92660 (US)
(74) Representative: Hoyng Rokh Monegier LLP
(86) International application number: PCT/EP2003/009187
(87) International publication number: WO 2004/020337

(56) References cited:
- EP-A- 0 150 256
- EP-A- 0 550 917
- DATABASE CA [Online] CHEMICAL ABSTRACTS SERVICE, COLUMBUS, OHIO, US; MEGED, N. F. ET AL: "Synthesis of pentasil -type zeolite with introduction of amorphous seeds" retrieved from STN Database accession no. 117:114588 CA XP002261039 & KHIMIYA I TEKHNOLOGIYA TOPLIV I MASEL (1992), (2), 13-14 , 1992,
- DATABASE WPI Section Ch, Week 199438 Derwent Publications Ltd., London, GB; Class J04, AN 1994-309358 XP002261100 & SU 1 686 794 A (AS SIBE CATALYSIS INST), 15 January 1994 (1994-01-15)

## Description

The present invention relates to the preparation of doped pentasil-type zeolites using doped seeds.

US 5,232,675 discloses a process for the preparation of rare earth metal (RE)-doped pentasil-type zeolites using RE-doped faujasite seeds. This process leads to the crystallisation of pentasil-type zeolite on the faujasite-type seeds. Hence, the product consists of two types of zeolites one within the other: a core of RE-doped faujasite and a shell of pentasil-type zeolite. So, the RE-ions are located in the core and not (or at least not significantly) in the pentasil-type shell. This will hinder the RE-ions from improving the activity, selectivity, and stability of the pentasil-type zeolite.

Furthermore, upon thermal treatment (e.g. during calcination, steaming, or use in an FCC unit), the RE-ions move to the very small sodalite cages of the faujasite zeolite, thereby further decreasing their influence on the activity, selectivity, and stability of the pentasil-type zeolite.

The present invention offers a process for the preparation of doped pentasil-type zeolites in which the dopant is not only located in the core.

This process involves the steps of:
a) preparing an aqueous precursor mixture from a silicon source, an aluminium source, and doped non-zeolitic seeds, and
b) thermally treating the precursor mixture to form a doped pentasil-type zeolite.

The process requires the use of doped non-zeolitic seeds.

The term "non-zeolitic seeds" includes seeds made from materials selected from the group consisting of
(a) X-ray amorphous materials - i.e. materials which are either amorphous, or containing crystallites too small to be detected by X-ray diffraction - such as an amorphous aluminosilicate nucleating gel according to, e.g., US 4,606,900, US 4,166,099, and Kasahara et al. in "Studies of Surface Science and Catalysis," Proceedings of the 7th International Conference on Zeolites 1986, pp. 185-192,
(b) milled crystalline materials, such as milled zeolites, that have a relative crystallinity of not more than 75%, and
(c) crystalline materials other than zeolites, such as clays (e.g. bentonite, sepiolites, smectites, kaolins, etc.) and (low) crystalline aluminas.

The relative crystallinity of the milled crystalline materials according to group b) preferably is not more than 60%, more preferably not more than 55%, and most preferably not more than 50%.

The relative crystallinity of the materials is determined by Powder X-ray diffraction using copper K-alpha radiation, thereby comparing the total net integrated intensity of one or more strong reflections of the seeding material with that of the same material but having 100% crystallinity (i.e. having no amorphous phases).
For instance, the relative crystallinity of milled sodium Y-zeolite is measured by determining the total net integrated intensity of the reflections covering the interplanar spacing range of 0.62 to 0.25 nm and comparing it with the intensity of a standard sodium Y-zeolite with a crystallinity of 100%.

The term "doped non-zeolitic seeds" refers to non-zeolitic seeds containing an additive (also called dopant). Suitable additives include compounds comprising rare earth metals such as Ce or La, alkaline earth metals such as Mg, Ca, and Ba, transition metals such as Mn, Fe, Ti, Zr, Cu, Ni, Zn, Mo, W, V, and Sn, actinides, noble metals such as Pt and Pd, gallium, boron, and/or phosphorus. Suitable compounds are the oxides, hydroxides, carbonates, hydroxy-carbonates, chlorides, nitrates, sulfates, and phosphates of the above elements. The dopant is present in the doped non-zeolitic seed in amounts of 1-30 wt%, preferably 2-10 wt%, and more preferably 3-7 wt%, calculated as oxide and based on the dry weight of the doped non-zeolitic seeds.

Seeds can be doped by, e.g., ion-exchange, preparation of the seed in the presence of an additive, impregnation, or solid state exchange. For example, clay or amorphous Si-AI cogel can be ion-exchanged, resulting in a doped clay or cogel, which can serve as doped non-zeolitic seed in the process according to the invention.

A doped non-zeolitic seed according to the above definition can also be prepared by milling a doped seed (e.g. RE-Y) until its relative crystallinity is 60% or less.

Without wishing to be bound by theory, it is assumed that during the process of the invention the non-zeolitic seeds will (re-)crystallise, thereby breaking down their original structure and releasing the dopant. This in contrast to the highly ordered doped faujasite seeds according to US 5,232,675, which retain their original structure containing the dopant.

The pentasil-type zeolite resulting from the process according to the invention preferably has a SiO₂/Al₂O₃ ratio of 25-90. Typical examples of pentasil-type zeolites are ZSM-type zeolites, such as ZSM-5, ZSM-5 and ZSM-11. The doped pentasil-type zeolite preferably contains 0.1-10 wt% of dopant, more preferably 0.1-3 wt%, and most preferably 0.5-2.5 wt%, calculated as oxide and based on the dry weight of the doped pentasil-type zeolite.

The first step of the process according to the invention involves the preparation of an aqueous precursor mixture comprising a silicon source, an aluminium source, and the doped non-zeolitic seeds. Preferably, the precursor mixture comprises 1-10 wt% of doped non-zeolitic seeds, based on the total solids content. More than one type of doped non-zeolitic seeds can be used in the process according to the invention.
The amount of aluminium and silicon source present in the precursor mixture depends on the desired SAR of the resulting doped pentasil-type zeolite.

It is possible for the precursor mixture to also contain an organic directing template. However, such templates are expensive and - as a result of their decomposition - environmentally harmful compounds are released upon heating of the so-prepared zeolites. Hence, it is preferred not to use a template in the process according to the invention.

Suitable aluminium sources include aluminium salts, such as Al₂(SO₄)₃, AlCl₃, AlPO₄, Al₂(HPO₄)₃, and Al(H₂PO₄)₃, and water-insoluble aluminium compounds, e.g. aluminium trihydrate (Al(OH)₃) such as gibbsite and bauxite ore concentrate (BOC), thermally treated aluminium trihydrate such as flash-calcined aluminium trihydrate, (pseudo)boehmite, aluminium chlorohydrol, aluminium nitrohydrol. Also mixtures of one or more of these aluminium sources can be used.
Alternatively, doped aluminium sources can be used. Examples of such doped aluminium sources are doped (pseudo)boehmite, doped aluminium trihydrate, and doped flash-calcined aluminium trihydrate.
Doped aluminium sources can be prepared by preparation of the aluminium source in the presence of the dopant, impregnation of the aluminium source with the dopant, or ion-exchanging the aluminium source with the dopant. Doped (pseudo)boehmite, for instance, can be prepared by hydrolysis of aluminium alkoxide in the presence of a dopant, hydrolysis and precipitation of aluminium salts in the presence of a dopant, or by aging a slurry of (thermally treated) aluminium trihydrate, amorphous gel alumina, or less crystalline (pseudo)boehmite in the presence of a dopant. For more information concerning the preparation of doped (pseudo)boehmite reference is made to International Patent Application Nos. WO 01/12551, WO 01/12552, and WO 01/12554.

Suitable silicon sources include sodium silicate, sodium meta-silicate, stabilised silica sols, silica gels, polysilicic acid, tetra ethylortho silicate, fumed silicas, precipitated silicas, and mixtures thereof.
Also doped silicon sources can be used. Doped silicon sources can be obtained by preparing the silicon source in the presence of the dopant, impregnating the silicon source with the dopant, or ion-exchanging the silicon source with the dopant.
Doped silica sol, for instance, can be obtained by preparing a silica sol from water glass and acid (e.g. sulfuric acid), and exchanging the sodium ions with the desired dopant. Alternatively, water glass, acid (e.g. sulfuric acid), and dopant are coprecipitated to form a doped silica sol.

Suitable dopants for the aluminium and/or the silicon source include compounds comprising rare earth metals such as Ce or La, alkaline earth metals such as Mg, Ca, and Ba, transition metals such as Zr, Mn, Fe, Ti, Zr, Cu, Ni, Zn, Mo, W, V, and Sn, actinides, noble metals such as Pt and Pd, gallium, boron and/or phosphorus. The optional dopant(s) present in the silicon and/or aluminium source and the dopant in the doped non-zeolitic seeds can be the same or different.

If so desired, several other compounds may be added to the precursor mixture, such as templates or non-doped seeds (e.g. ZSM-5 seeds, zeolite beta seeds), metal (hydr)oxides, sols, gels, pore regulating agents (sugars, surfactants), clays, metal salts, acids, bases, etc.
Furthermore, it is possible to mill the precursor mixture.

If so desired, the precursor mixture may be shaped to form shaped bodies. Suitable shaping methods include spray-drying, pelletising, extrusion (optionally combined with kneading), beading, or any other conventional shaping method used in the catalyst and absorbent fields or combinations thereof. The amount of liquid present in the precursor mixture should be adapted to the specific shaping step to be conducted. It might be advisable to partially remove the liquid used in the precursor mixture and/or add an additional or another liquid, and/or to change the pH of the precursor mixture to make the mixture gellable and thus suitable for shaping. Additives commonly used in the different shaping methods, e.g. extrusion additives, may be added to the precursor mixture used for shaping.

The second step of the process involves thermal treatment of the precursor mixture at temperatures preferably ranging from 130 to 200°C, more preferably 150-180°C, for 3-60 hrs. During this step, the doped pentasil-type zeolite is formed by crystallisation.
The thermal treatment can be conducted in one or a series of at least two reaction vessels. If more than one such vessel is used, the process is preferably conducted in a continuous mode. Using more than one reaction vessel further allows the aqueous precursor mixture to be prepared either by adding all ingredients to the first vessel, or by spreading the addition of (part of the total amount of) the ingredients over the reaction vessels.

If so desired, the resulting doped pentasil-zeolite may be calcined and optionally ion-exchanged.

The so-formed doped pentasil-type zeolite can be used in or as a catalyst composition or catalyst additive composition for, e.g. hydrogenation, dehydrogenation, catalytic cracking (FCC), and alkylation reactions.

### EXAMPLES

### Example 1

A 29.8 wt% aluminium sulfate solution (484 g) and a 30.3 wt% H₂SO₄ solution (597 g) were added to a stirred 30-litre vessel containing 3,026 g water. To this solution, 3,084 g of water glass were slowly added in 15 minutes. A gel was formed during the addition.

A first seeding slurry was prepared by milling an aqueous slurry (Loss on Ignition at 1,000°C = 27.7 wt%) of Na- and RE-exchanged zeolite Y using a KD-03 mill (bead size 1 mm). The relative crystallinity of the resulting seeds was 49%.
This relative crystallinity was determined by X-ray-diffraction using Cu K-alpha radiation. The peak areas for the sample's faujasite peaks within the scan range 14-36° 2-theta were determined using the Bruker profile fitting program Topasp. The pattern of a curved background was fitted according to the multiple background method and then substracted from the measured faujasite pattern. The so-obtained total net integrated intensity of the sample's reflections covering the interplanar spacing range of 0.62 to 0.25 nm, relative to that of a standard sodium Y-zeolite with a crystallinity of 100%, was the relative crystallinity.

A second seeding slurry (Loss on Ignition at 1,000°C = 14.1 wt%) was prepared by mixing a commercial ZSM-5 and water. The slurry was milled until the ZSM-5 had an average particle size of 0.89 µm.
104 g of the first seeding slurry were mixed with 205 g of the second seeding slurry. The resulting seeding slurry was slowly added to the aluminium sulfate/water glass mixture under vehement stirring for 10 minutes. The slurry was autoclaved for 5 hours at 170°C and dried overnight in a stove at 120°C.

The PXRD pattern of the sample showed the formation of ZSM-5. No separate La₂O₃, La(OH)₃, or Ce₂O₃ phases were detected, meaning that the rare earth metal dopant was not precipitated as a separate phase.
XPS and SEM/EDAX showed that the rare earth metal was present in the entire zeolite structure; not only in its core.

### Example 2

A 29.8 wt% aluminium sulfate solution (530 g) and a 30.3 wt% H₂SO₄ solution (616 g) were added to a stirred 30-litre vessel containing 2,879 g water. To this solution, 3,084 g of water glass were slowly added in 15 minutes. A gel was formed during the addition.
La-doped amorphous seeds were prepared by adding La(NO₃)₃·6H₂O to an amorphous aluminosilicate nucleating gel. The gel was milled while diluting with water. The resulting first seeding slurry had a Loss on Ignition (LOI) at 1,000°C of 22.1 wt%; the La-concentration was 20 wt% (calculated as La₂O₃ and based on the dry weight of the doped seeds after heating at 1,000°C).
A second seeding slurry (LOI at 1,000°C = 14.1 wt%) was prepared by mixing a commercial ZSM-5 and water. The slurry was milled until the ZSM-5 had an average particle size of 0.89 µm.
152 g of the first seeding slurry were mixed with 240 g of the second seeding slurry. The resulting seeding slurry was slowly added to the aluminium sulfate/water glass mixture under vehement stirring for 10 minutes. The slurry was autoclaved for 5 hours at 170°C and dried overnight in a stove at 120°C.

The PXRD pattern of the sample showed the formation of ZSM-5. No separate La₂O₃ or La(OH)₃ phases were detected, meaning that the La-dopant was not precipitated as a separate phase.
XPS and SEM/EDAX showed that the rare earth metal was present in the entire zeolite structure; not only in its core.

## Claims

1. Process for the preparation of doped pentasil-type zeolite, which process comprises the steps of:
a) preparing an aqueous precursor mixture from a silicon source, an aluminium source, and doped non-zeolitic seeds, and
b) b) thermally treating the precursor mixture to form a doped pentasil-type zeolite.

2. A process according to claim 1 wherein the non-zeolitic seeds are X- ray amorphous.

3. A process according to claim 1 wherein the non-zeolitic seeds are milled crystalline materials that have a relative crystallinity of not more than 75%.

4. A process according to claim 3 wherein the milled crystalline materials have a relative crystallinity of not more than 60%.

5. A process according to claim 4 wherein the milled crystalline materials have a relative crystallinity of not more than 50%.

6. A process according to claim 1 wherein the non-zeolitic seeds are crystalline materials other than zeolites.

7. A process according to any one of the preceding claims wherein the non- zeolitic seeds are doped with a dopant selected from the group consisting of Ce, La, Zr, Mn, Fe, Ti, Cu, Ni, Zn, Mo, W, V, Sn, Pt, Pd, Ga, B, and P.

8. A process according to any one of the preceding claims wherein the silicon source is selected from the group consisting of sodium (meta)silicate, stabilised silica sols, silica gels, polysilicic acid, tetra ethylortho silicate, fumed silicas, precipitated silicas, and mixtures thereof.

9. A process according to any one of the preceding claims wherein the aluminium source is selected from the group consisting of Al₂(SO₄)₃, AlCl₃, AlPO₄, Al₂(HPO₄)₃, Al(H₂PO₄)₃- aluminium trihydrate (Al(OH)₃), thermally treated aluminium trihydrate, (pseudo)boehmite, aluminium chlorohydrol, aluminium nitrohydrol, and mixtures thereof.

10. A process according to any one of the preceding claims wherein a shaping step is performed between steps a) and b).

## Patentansprüche

1. Verfahren zur Herstellung von dotiertem Zeolith vom Pentasil-Typ, wobei das Verfahren die folgenden Schritte umfasst:
a) Herstellen einer wässrigen Vorstufenmischung aus einer Siliciumquelle, einer Aluminium-Quelle und dotierten nicht-zeolithischen Keimen und
b) thermische Behandlung der Vorstufenmischung unter Bildung eines dotierten Zeoliths vom Pentasil-Typ.

2. Verfahren nach Anspruch 1, wobei die nicht-zeolithischen Keime röntgenamorph sind.

3. Verfahren nach Anspruch 1, wobei die nicht-zeolithischen Keime gemahlene kristalline Materialien sind, die eine relative Kristallinität von nicht mehr als 75 % aufweisen.

4. Verfahren nach Anspruch 3, wobei die gemahlenen kristallinen Materialien eine relative Kristallinität von nicht mehr als 60 % aufweisen.

5. Verfahren nach Anspruch 4, wobei die gemahlenen kristallinen Materialien eine relative Kristallinität von nicht mehr als 50 % aufweisen.

6. Verfahren nach Anspruch 1, wobei die nicht-zeolithischen Keime kristalline Materialien außer Zeolithe sind.

7. Verfahren nach einem der vorhergehenden Ansprüche, wobei die nicht-zeolithischen Keime mit einem Dotiermittel dotiert sind, ausgewählt aus der Gruppe bestehend aus Ce, La, Zr, Mn, Fe, Ti, Cu, Ni, Zn, Mo, W, V, Sn, Pt, Pd, Ga, B und P.

8. Verfahren nach einem der vorhergehenden Ansprüche, wobei die Siliciumquelle aus der Gruppe bestehend aus Natrium(meta)silikat, stabilisierten Kieselsolen, Kieselgelen, Polykieselsäure, Tetraethylorthosilikat, pyrogenen Kieselsäuren, gefällten Kieselsäuren und Mischungen davon ausgewählt ist.

9. Verfahren nach einem der vorhergehenden Ansprüche, wobei die Aluminiumquelle aus der Gruppe bestehend aus Al₂(SO₄)₃, AlCl₃, AlPO₄, Al₂(HPO₄)₃, Al(H₂PO₄)₃, Aluminium trihydrat (Al(OH)₃), thermisch behandeltem Aluminiumhydroxid, (Pseudo)böhmit, Aluminiumchlorhydrat , Aluminiumnitrohydrat und Mischungen davon ausgewählt ist.

10. Verfahren nach einem der vorhergehenden Ansprüche, wobei zwischen den Schritten a) und b) ein Formungsschritt durchgeführt wird.

## Revendications

1. Procédé de préparation de zéolite de type pentasil dopé, lequel procédé comprend les étapes consistant à :
a) préparer un mélange précurseur aqueux à partir d'une source de silicium, d'une source d'aluminium et de germes non zéolitiques dopés ; et
b) traiter thermiquement le mélange précurseur pour former une zéolite de type pentasil dopé.

2. Procédé selon la revendication 1, dans lequel les germes non zéolitiques sont amorphes aux rayons X.

3. Procédé selon la revendication 1, dans lequel les germes non zéolitiques sont des matières cristallines broyées qui ont une cristallinité relative de pas plus de 75 %.

4. Procédé selon la revendication 3, dans lequel les matières cristallines broyées ont une cristallinité relative de pas plus de 60 %.

5. Procédé selon la revendication 4, dans lequel les matières cristallines broyées ont une cristallinité relative de pas plus de 50 %.

6. Procédé selon la revendication 1, dans lequel les germes non zéolitiques sont des matières cristallines autres que les zéolites.

7. Procédé selon l'une quelconque des revendications précédentes, dans lequel les germes non zéolitiques sont dopés par un dopant choisi dans le groupe consistant en Ce, La, Zr, Mn, Fe, Ti, Cu, Ni, Zn, Mo, W, V, Sn, Pt, Pd, Ga, B et P.

8. Procédé selon l'une quelconque des revendications précédentes, dans lequel la source de silicium est choisie dans le groupe consistant en le (méta)silicate de sodium, les sols de silice stabilisés, les gels de silice, l'acide polysilicique, le tétra éthyl ortho silicate, les silices fumées, les silices précipitées et leurs mélanges.

9. Procédé selon l'une quelconque des revendications précédentes, dans lequel la source d'aluminium est choisie dans le groupe consistant en Al₂(SO₄)₃, AlCl₃, AlPO₄, Al₂(HPO₄)₃, Al(H₂PO₄)₃, trihydrate d'aluminium (Al(OH)₃), le trihydrate d'aluminium traité thermiquement, le (pseudo)boehmite, l'aluminium chlorohydrol, l'aluminium nitrohydrol et leurs mélanges.

10. Procédé selon l'une quelconque des revendications précédentes, dans lequel une étape de façonnage est effectuée entre les étapes a) et b).
